# EUROPEAN PATENT APPLICATION

(11) **EP 0 918 002 A2**
(43) Date of publication of application: **26.05.1999**
(21) Application number: 98121764.9
(22) Date of filing: 16.11.1998
(51) Int. Cl.: B60S 3/06

(54) **Vehicle washing apparatus**

(30) Priority: 19.11.1997 IT MI972570
(71) Applicant: CECCATO S.p.A., I-36041 Montecchio Maggiore (Vicenza) (IT)
(72) Inventor: Pillon, Pierangelo, 36040 Brendola (IT)
(74) Representative: Rapisardi, Mariacristina

(57) **Abstract**

The vehicle washing apparatus comprises active vehicle cleaning members (6) cooperating with vehicle fluid spraying members, overload disconnecting means being connected to said active cleaning members for automatically stop the mechanical cleaning action on the vehicle.

## Description

The present invention relates to a vehicle washing apparatus.

Conventional apparatus for washing and possibly drying vehicles such as cars, trains, trucks, buses, industrial vehicles, military vehicles, etc., are provided with active cleaning members such as for example vertical and horizontal brushes adapted to remove dirt from the body work of the vehicle.

Generally, the apparatus is also provided with fluid dispensing members for such fluids as detergents, polish, and similar products, and is also possibly provided with drying members constituted by drying nozzles adapted to eject pressurized air.

Generally, the vehicle is cleaned by first spraying the vehicle with water and chemical products followed by the mechanical action of the brushes for removing the dirt particles.

Usually, the brushes adapted to mechanically clean the vehicle are provided with a support shaft operated by a motor and having a plurality of cleaning members such as bristles and/or Nylon (Trademark) threads and/or thread and/or fabric tufts or any other adapted material.

The rotation of the support shaft by the motor causes a centrifugal force on the threads that thereby effect a mechanical action when they contact the surface to be cleaned which is usually also simultaneously sprayed with water and shampoo.

A main inconvenience of the above described brushes is that the threads or tufts made of Nylon (trademark) and/or polyethylene may catch in parts of the vehicle such as the windscreen wipers, rearview mirrors, aerials, etc.

This inconvenience may cause the detachment of the thread, bristle or tuft thereby damaging the brush and making it useless, or even damaging the vehicle parts.

Furthermore, the cleaning members often catch in protruding parts of the vehicle causing the cleaning member to detach from the brush and forcing the owner of the vehicle or the user of the apparatus to manually remove the cleaning member stuck into the vehicle.

It is also to be noted that sometimes the pressure of brushes on the body work causes micro-abrasions to the paint job causing loss of gloss and of the protective and aesthetic functions of the paint job.

Sometimes, when the brushes are made of fabric or other material having a greater mass than the Nylon or polyethylene threads, the impact of the brush onto the body work may even cause breakages or other important damages.

An aim of the present invention is to eliminate the above cited inconveniences of the prior art.

An object of the invention is to provide a vehicle washing apparatus that prevents the cleaning members such as the threads or tufts made of Nylon (trademark) and/or polyethylene from catching in parts of the vehicle such as the windscreen wipers, rearview mirrors, aerials, etc.

A further object of the invention is to provide a vehicle washing apparatus that prevents the detachment of the cleaning members from the brush during the washing in order to reduce or eliminate the premature wear of the brushes.

Still a further object of the invention is to provide a vehicle washing apparatus wherein one or more sections of the brushes may stop the rotation automatically according to the shape or parts of the vehicle.

Still a further object of the invention is to provide a vehicle washing apparatus wherein one or more sections of the brushes may stop or resume the rotation automatically when subjected to or freed from a force exceeding a preset value in order to prevent an excessive wear of the paint job of the vehicle.

Still a further object of the invention is to provide a vehicle washing apparatus provided with a brush having all the above advantages and at the same time having a a high safety standard and low production cost.

The above and other aims and objects are achieved by a vehicle washing apparatus comprising active vehicle cleaning members cooperating with at least vehicle fluid spraying members, characterized in that it comprises overload disconnecting means connected to said active cleaning members for automatically stop the mechanical cleaning action on the vehicle.

Further characteristics and advantages of the invention will be more apparent by the following description of a vehicle washing apparatus according to the invention, illustrated, by way of example in the enclosed drawings in which
FIG. 1 is a schematic top plan view of the vehicle washing apparatus according to the invention;
FIG. 2 is a top plan view of a brush for cleaning vehicles, transversely sectioned, according to the invention;
FIG. 3 is a view according to the section line III-III of FIG. 2, according to the invention.

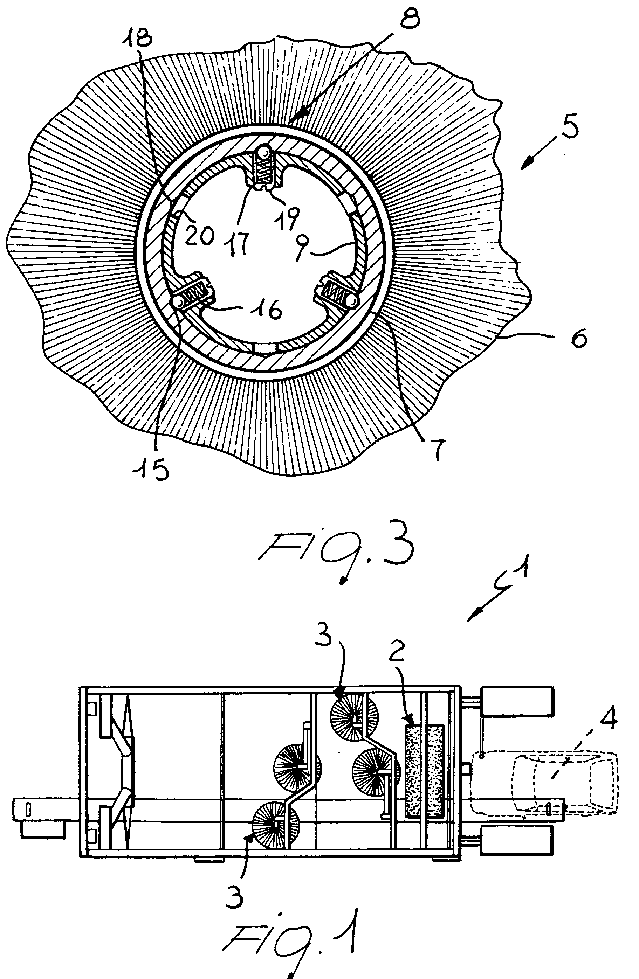

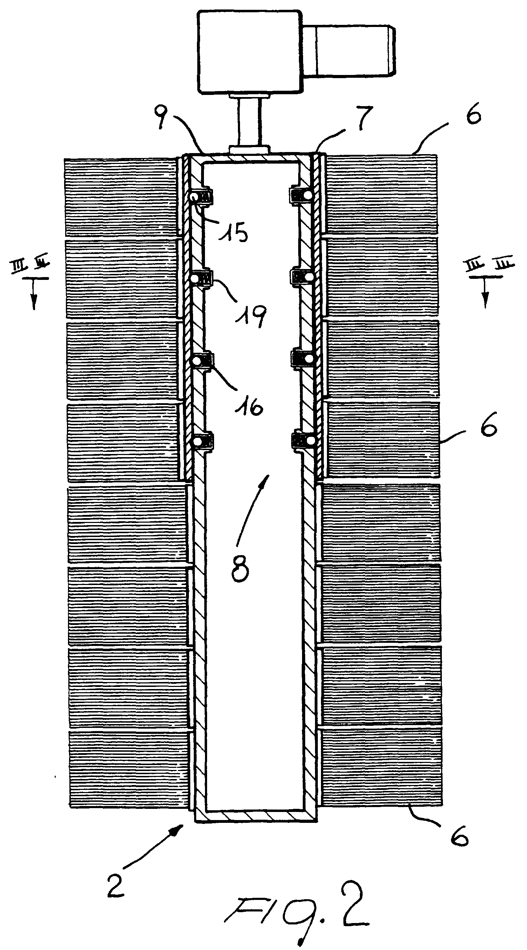

With reference to the drawings, the vehicle washing apparatus according to the invention, globally designated by the reference numeral 1, comprises active vehicle cleaning members, such as for example horizontal and vertical brushes 2 and 3 for cleaning a vehicle 4, cooperating with fluid spraying members, for spraying fluids such as, shampoo, polish and similar, on the vehicle during the washing operation.

Advantageously, the apparatus comprises overload disconnecting means, globally designated by the reference numeral 5, connected to the brushes 2 and/or 3, for automatically stop their mechanical cleaning action on the vehicle 4.

Each brush has a plurality of cleaning members 6, such as bristles and/or threads and/or tufts made of Nylon (trademark) and/or polyethylene and/or a fabric or any other material adapted to clean the vehicle.

The overload disconnecting means 5 are arranged inside the brush in order to be protected during the washing operation.

In particular, the disconnecting means 5 comprises at least one support member 7 supporting a plurality if cleaning members 6 and associated with a support and operating shaft 9, through an automatic disconnecting device 8. The shaft 9 effects the rotation of the horizontal and vertical brushes.

Support member 7, supporting the cleaning members 6, comprises at least one cylinder arranged coaxially and externally to the support shaft 9.

Conveniently, cylinder 7 extends along at least one portion of the support shaft 9 or along the entire length of the shaft, according to the specific needs.

In a preferred embodiment, cylinder 7 is divided into several sectors arranged along only a portion of the support shaft or along its entire length.

In particular, the automatic disconnecting device, between the support shaft 9 and the coaxial cylinder 7, comprises at least one sphere 15 which is mobile inside a seat 17 and biased by an elastic means such as a preset spring 16.

In this manner the sphere may, as better explained later, engage or disengage a recess 18 provided in the coaxial cylinder 7.

The seat 17, accommodating sphere 15 and spring 16, is formed in an adjuster member 19, adapted to screw and unscrew in a housing 20 in order to compress or release spring 16 according to the need.

The seats 17 are radially arranged inside the support shaft 9.

Antifriction members, not illustrated in the drawings are provided for allowing the independent rotation between the support shaft 9 and cylinder 7, once the spheres 15 have disengaged from the respective recesses 18.

The operation of the brush according to the invention is apparent from the above description.

In particular, when the bristles or other cleaning members catch into a vehicle part, for example a superstructure of the vehicle, an overload is generated which exceeds the force of spring 16 thus making the sphere 15 exit its respective recess 18 and, consequently, causing the independent rotation between the support shaft 9with respect of the external and coaxial cylinder 7.

After one third of a turn, or a full turn, according to the number of spheres, if the condition of overload persists (the bristles are caught into a superstructure of the vehicle) the cylinder 7 remains idle.

Subsequently, the forward motion of the bridge on which the brushes are mounted, will free the bristle from the superstructure allowing the cylinder 7 back in association with the support shaft 9, because of the spheres 15 engaging the respective recesses 18 thus obtaining the synchronous rotation of the support shaft and cylinder 7.

It has been seen in practice how the vehicle washing apparatus is particularly advantageous in preventing a rapid wear of the brushes due to the detachment of their cleaning members such as threads or tufts made of Nylon, polyethylene or fabric or any other material adapted to washing a vehicle.

The vehicle washing apparatus according to the invention may have numerous modifications and variations, all within the inventive concept.

For example, it is apparent that there may be a reverse positioning of the spheres that may for example be accommodated in the external cylinder 7 and engage recesses formed in the supporting shaft 9 without departing from the scope of the invention.

Furthermore, the above described and claimed embodiment may be applied to any type of brush or cleaning members therein.

All the details may be substituted with technically equivalent elements.

The materials employed, as well as the dimensions, may be any according to the specific needs and the state of the art.

## Claims

1. A vehicle washing apparatus comprising active vehicle cleaning members (2,3) cooperating with vehicle fluid spraying members, characterized in that it comprises overload disconnecting means (5) connected to said active cleaning members (2,3) for automatically stop the mechanical cleaning action on the vehicle (4).

2. The apparatus, according to claim 1, characterized in that said active cleaning means comprises at least one horizontal and/or vertical brush (2,3) having a plurality of cleaning members (6), said overload disconnecting means being arranged in said brushes.

3. The apparatus, according to one or more of the preceding claims, characterized in that said overload disconnecting means comprises at least one support member (7) supporting a plurality of said cleaning members (6) and connected to a support shaft (9) supporting and operating the rotation of said vertical and/or horizontal brushes, through an automatic disconnecting means (5).

4. The apparatus, according to one or more of the preceding claims, characterized in that said support member of said cleaning members comprises at least one cylinder (7) coaxial and external to said support shaft (9).

5. The apparatus, according to one or more of the preceding claims, characterized in that said cylinder (7) extends along at least a portion of said support shaft (9).

6. The apparatus, according to one or more of the preceding claims, characterized in that said automatic device comprises at least one sphere (15) mobile inside a seat (17) and biased by elastic means (16), for its engagement and disengagement in a recess (18) provided on said coaxial cylinder (7).

7. The apparatus, according to one or more of the preceding claims, characterized in that said seat (17) comprises an adjuster member (19) for adjusting said elastic means (16).

8. The apparatus, according to one or more of the preceding claims, characterized in that said elastic means is a preset spring (16).

9. The apparatus, according to one or more of the preceding claims, characterized in that said seats (17) and said spheres (15) are arranged radially inside said support shaft (9).

10. The apparatus, according to one or more of the preceding claims, characterized in that antifriction members are provided between said support shaft (9) and said cylinders (7).

11. The apparatus, according to one or more of the preceding claims, characterized in that said cleaning members (6) are bristles and/or threads and/or tufts of threads made of fabric or any other material adapted to clean said vehicle (4).

12. A brush for vehicle cleaning apparatus, characterized in that it comprises cleaning members (6) for cleaning a vehicle (4) and supported at least partially by a support shaft (9) and at least partially by at least one cylinder (7) coaxial and external to said support shaft, said support shaft and said at least one cylinder having automatic overload disconnecting means (5) for their momentarily independent rotation.
